# EUROPEAN PATENT APPLICATION

(11) **EP 4 686 857 A1**
(43) Date of publication of application: **04.02.2026**
(21) Application number: 24191489.4
(22) Date of filing: 29.07.2024
(51) Int. Cl.: F16H 57/04

(54) **ARRANGEMENT FOR LUBRICATION**

(71) Applicant: Deere & Company, Moline, IL 61265 (US)
(72) Inventor: Perez Jamirez, Javier, Mannhiem (DE); Moreno, Jorge, Mannheim (DE); Gil, Monica, Mannheim (DE); Vergara Martinez, Daniel, Mannheim (DE)
(74) Representative: Reichert, Christian

(57) **Abstract**

Arrangement for lubrication, comprising a housing, at least a rotating element, a first lubrication accumulation space at a higher location in the housing than a rotating axis of the rotating element, a second lubrication accumulation space at a lower location than the rotating axis of the rotating element, a baffle element, positioned within the second lubrication accumulation space, the baffle element having an intake opening so that lubricant is enabled to enter, and having a higher positioned outlet opening through which lubricant is released.

## Description

The invention concerns a lubrication arrangement which can provide lubricant to a bearing or contact surface inside a gearbox or a shaft arrangement.

Gearbox designs require lubrication for bearing or similar contact surfaces with relative movement, as well as shafts positioning designs for housings. The lubricant reduces wear and improves efficiency as well as transfers heat and particles. Lubricant is guided by pumps and channels or sprayed to relevant locations throughout the housing. Rotation of shafts and gearwheels as well as connected components induce a centrifugal force on the lubricant which drives the lubricant away from the location of lubrication hindering a constant and even flow of lubricant to the rotational part of the design.

The problem is solved by the present invention providing a lubrication arrangement which avoids channels and active nozzle spraying to guide the lubricant even at high revolutions of the rotating elements.

The invention is an arrangement for lubrication, comprising a housing, at least a rotating element, a first lubrication accumulation space at a higher location in the housing than a rotating axis of the rotating element, a second lubrication accumulation space at a lower location than the rotating axis of the rotating element, a baffle element, positioned within the second lubrication accumulation space, the baffle element having an intake opening so that lubricant is enabled to enter, and having a higher positioned outlet opening through which lubricant is released, the second lubrication accumulation space being a space within the baffle element so that the second lubrication accumulation space is protected and separated from the rotating element, a bearing, positioning the rotating element, the lubricant being directed from the first to the second lubricant accumulation space and further from the intake opening through the baffle element to the outlet opening to the bearing.

The arrangement provides a protected space around the rotating element where the lubricant cannot be splashed away from the intended lubrication location but is instead accumulated within the baffle providing the second lubrication accumulation space and provided precisely to the bearing.

In a further embodiment the bearing can be a needle bearing.

Needle bearings offer a high lifetime together with a small volume necessary for the bearing function. The small thickness of the bearing makes it difficult to provide sufficient lubrication. The invention enables the provision of a needle bearing in a very narrow available design space.

In a further embodiment the rotating element can be a shaft and/or a gear wheel.

The rotating elements being provided in gearboxes or housing like axels, bearings, gear wheels or shaft are hindering a constant and even lubricant flow with the housing space as the rotation induces centrifugal forces leading the lubricant away from intended lubrication locations. The invention enables to prevent centrifugal forces and provides a directed lubricant flow.

In another embodiment the baffle element can comprise a segment, that is concentric to the rotating element and the bearing.

The baffle element is thus partly surrounding the rotating element in a part of its lengthwise elongation. The second lubrication accumulation space can be provided in a close proximity to the rotating element and close to the bearing reducing the length of the lubrication path and also blocking the rotating element from splashing or displacing the lubricant.

In another embodiment the intake and outlet opening can be enclosing an angle of 90° or less.

The intake opening is oriented so that lubricant can flow in a horizontal direction, while the outlet opening is allowing a vertical flow of the lubricant. The opening enables the arrangement to have a limited build space and allows the arrangement to be of compact design.

In another embodiment the intake and outlet opening can be enclosing an angle of more than 90°.

Depending on the lubrication location the opening can enclose a larger angle to optimize the length of the lubrication path and use the design limitations with a reduced volume.

In another embodiment the lubricant can be distributed by the rotating element so that the lubricant is driven to the first accumulation space, flowing downward through the housing to the second accumulation space and through the outlet opening to lubricate the bearing from below the rotating element.

The rotating element can be used to displace the lubricant to the first lubricant accumulation space avoiding the provision of a pump. The lubricant flows downward by gravitation and reaches the second accumulation space without interference of the rotating element. The constant flow enables the lubricant to reach the outlet opening adjacent to the bearing.

In another embodiment the baffle element diameter can be adapted so that the baffle element partly surrounds the rotating element and the bearing.

The dimensioning of the diameter of the baffle element enables a compact design and ensures a close placement of the baffle element adjacent to the rotating element and the bearing. The overall build space of the gearbox or axle arrangement can be of reduced size.

The lubrication path is of reduced length requiring less lubrication in the complete system.

In another embodiment the outlet opening can comprise a curved shape, being adapted to a diameter of the rotating element and a diameter of the bearing.

The baffle element can be located in close proximity to the rotating element still ensuring protection of the second accumulation space and preventing displace of the lubricant by the rotating element. The curved shape being adapted to the bearing diameter enables to protect the complete path of the lubricant and limits the loss of lubricant due to displacement. The lubrication of the bearing is improved, requiring a fraction of lubrication.

In another embodiment the lubricant fill level can be at least at the height level of the outlet opening.

The fill level during rotation ensures a constant and even flow of lubricant from the outlet opening to the bearing.

The invention is described with figures 1 to 3, wherein
Figure 1 discloses a first cut view of the arrangement;
Figure 2 shows a second cut view of the arrangement;
Figure 3 shows a detail of the baffle element.

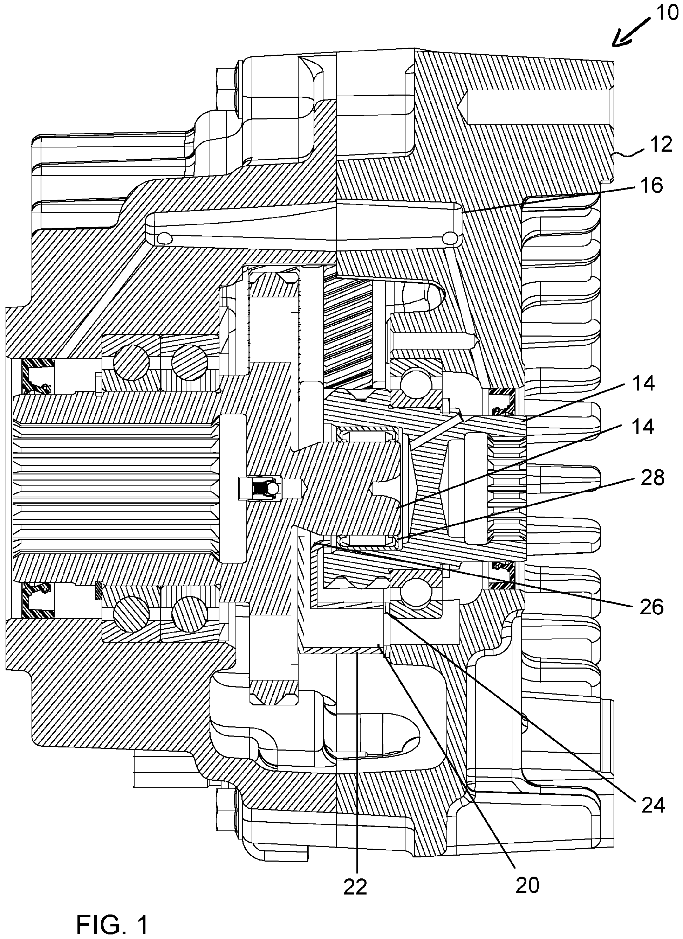

Figure 1 depicts the arrangement 10. A housing 12 is provided to enclose a gearing setup with multiple axles or shafts. The housing in the example has a rotating element 14 which is positioned by bearing, being a mix of ball and needle bearings. The housing has a first lubrication accumulation space 16 which is in a higher position that the axis 18 of the rotating element 14. The housing 12 is shown in a use position where the lower half is oriented towards the ground, base or gravity.

In an area below the rotating element 14 a second lubrication accumulation space 20 is provided in a baffle element 22. The baffle element 22 is provided in an area directly below the rotating element 14. The baffle element 22 has an intake opening 24 where lubricant can enter into the second lubrication accumulation space 20. The intake opening 24 is adjacent to a shoulder in the housing from where the lubricant enters the baffle element 22.

The baffle element 22 has an outlet opening 26 which guides the lubricant directly into the bearing 28, being a needle bearing in this embodiment, which could also be a ball bearing or similar.

The lubricant is provided from a sump in the housing 12 being at a bottom of the housing 12. During rotation of the gearbox or shafts/axels, the lubricant is displaced from the bottom into the first lubrication accumulation space 16 from below. By a channel or opening the lubricant flows under the influence of gravity downwards toward the intake opening 24 and into the baffle element 22. The baffle element 22 has an outer and inner circumferential wall as well as a back wall which defines the volume of the second lubrication accumulation space 20. The outer and inner circumferential wall separates the lubricant from the rotating element 14 enabling the accumulation of the lubricant in close proximity to the rotating element 14 preventing splashing or displacement by rotational forces.

The back wall of the baffle element 22 leads toward a passage to the outlet opening 26 being at a higher position than the intake opening 24. The baffle element 22 in the embodiment has a curvature to position the outlet opening 26 adjacent to the bearing 28 enabling a loss free lubricant flow through the bearing 28. The bearing 28 rotates during use so that the lubricant is distributed around the whole circumference of the bearing 28. As the baffle element 22 is only partly surrounding the rotational element 14 as a segment shape, the lubricant is displaced on an upside of the bearing 28 and the rotating element 14 and thus redirected toward the sump of the housing 14.

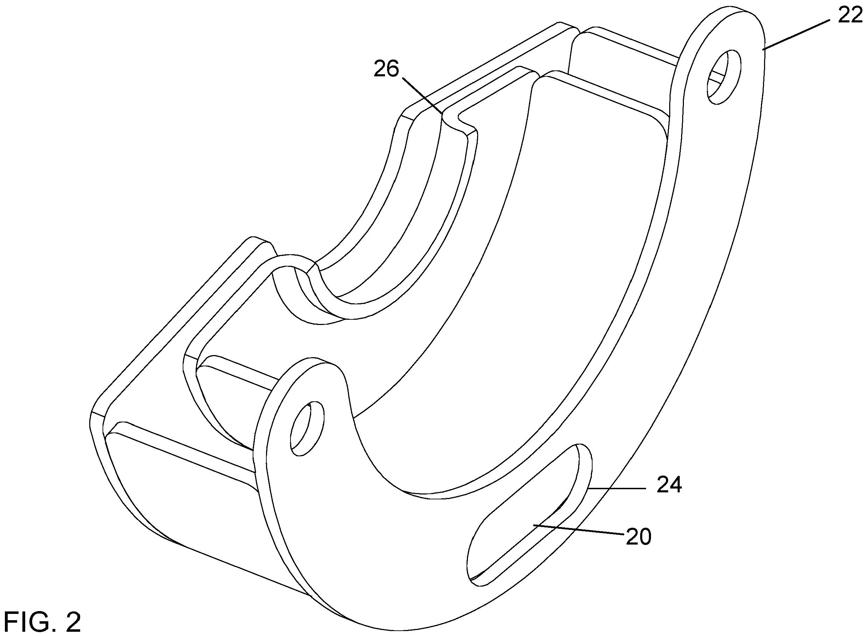

Figure 2 depicts the baffle element 22. The baffle element 22 has a curved shape or u-shape with an additional wall on one side so that the inner opening of the baffle element 22 is closed. The u-shaped bracket is connected to a double wall, being an inner and outer wall in a radial direction. Between the inner and outer circumferential wall exists a volume which is creating the second lubrication accumulation space 20, which extends around a central axis of the baffle element 22. On the u-shaped bracket is the intake opening 24 through which lubricant can enter into the second lubricant accumulation space 20 from one side from the housing 12. The second lubricant accumulation space 20 is over time being filled with lubricant until upper surface of the lubricant reaches the outlet opening 26 and enter the bearing 28. The wall of the baffle element 22 is also designed as a double wall so that the outlet opening 26 is connected by this channel to the second lubricant accumulation space 20.

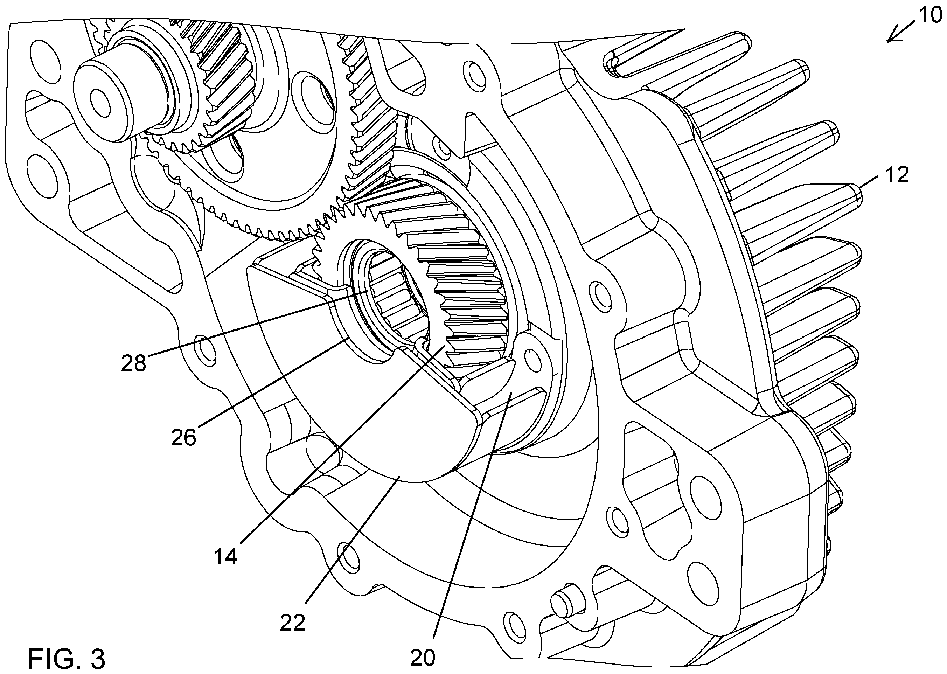

Figure 3 shows another view of the arrangement 10 in an oblique angle of the axis 18. The housing 12 carries multiple differently sized gear wheels or rotating element 14. The baffle element 22 is fixed to the housing 12. The baffle element 22 has a segmental shape so as to partly surround the rotating element 14 wherein the segmental shape has the same axis 18 at its center. The baffle element 22 may have additional opening on its segmental ends. The inner and outer circumferential walls of the baffle element 22 define the volume of the second lubrication accumulation space 20 together with a back wall which further closes the baffle element 22 on one side. From the second lubrication accumulation space 20 a part of the segment leads to the outlet opening 26 which is adjacent to the main diameter of the bearing 28. The intake opening 24 is not visible but is positioned on the lower part of the baffle element 22 towards the contact surface with the housing 14 below the axis 18. The lubricant leaves the baffle element 22 at the outlet opening 26 and flows into the bearing 28. The baffle element 22 defines the second lubrication accumulation space 20 between the sump of the housing or a bottom of the housing and the rotating element 14. As the lubricant flows from an upper part of the housing 14 to the intake opening 24 and into the baffle element 22, the rotating element 22 is prevented from displacing the lubricant by the inner and outer circumferential wall of the baffle element 22. After leaving the bearing 28, the lubricant can either flow on the upside of the inner circumferential wall of the baffle element 22 or can be directly displaced by the rotating element 14, restarting the flow circle of the lubricant.

## Claims

1. Arrangement for lubrication (10), comprising
a housing (12),
at least a rotating element (14),
a first lubrication accumulation space (16) at a higher location in the housing than a rotating axis (18) of the rotating element (14),
a second lubrication accumulation space (20) at a lower location than the rotating axis (18) of the rotating element (14),
a baffle element (22), positioned within the second lubrication accumulation space (20), the baffle element (22) having an intake opening (24) so that lubricant is enabled to enter,
and having a higher positioned outlet opening (26) through which lubricant is released, the second lubrication accumulation space (20) being a space within the baffle element (22) so that the second lubrication accumulation space (20) is protected and separated from the rotating element (14),
a bearing (28), positioning the rotating element (14),
the lubricant being directed from the first to the second lubricant accumulation space (16, 20) and further from the intake opening (24) through the baffle element (22) to the outlet opening (26) to the bearing (28).

2. Arrangement according to claim 1, wherein the bearing (28) is a needle bearing.

3. Arrangement according to any previous claim, wherein the rotating element (14) is a shaft and/or a gear wheel.

4. Arrangement according to any previous claim, wherein the baffle element (22) comprises a segment, that is concentric to the rotating element (14) and the bearing (28).

5. Arrangement according to any previous claim, wherein the intake and outlet opening (24, 26) are enclosing an angle of 90° or less.

6. Arrangement according to any previous claims 1 to 4, wherein the intake and outlet opening (24, 26) are enclosing an angle of more than 90°.

7. Arrangement according to any previous claim, wherein the lubricant is distributed by the rotating element (14) so that the lubricant is driven to the first lubricant accumulation space (16), flowing downward through the housing (12) to the second lubricant accumulation space (20) and through the outlet opening (26) to lubricate the bearing (28) from below the rotating element (14).

8. Arrangement according to any previous claim, wherein the baffle element (22) has a diameter that is adapted so that the baffle element (22) partly surrounds the rotating element (14) and the bearing (28).

9. Arrangement according to any previous claim, wherein the outlet opening (26) comprises a curved shape, being adapted to a diameter of the rotating element (14) and a diameter of the bearing (28).

10. Arrangement according to any previous claim, wherein the lubricant fill level is at least at the height level of the outlet opening (26).
